(19) Europäisches Patentamt
European Patent Office
Office européen des brevets

(11) **EP 2 103 070 B1**

(12) **EUROPÄISCHE PATENTSCHRIFT**

(45) Veröffentlichungstag und Bekanntmachung des Hinweises auf die Patenterteilung:
**09.12.2015  Patentblatt 2015/50**

(21) Anmeldenummer: **07727239.1**

(22) Anmeldetag: **22.03.2007**

(51) Int Cl.:
***H04L 27/26*** *(2006.01)*

(86) Internationale Anmeldenummer:
**PCT/EP2007/052765**

(87) Internationale Veröffentlichungsnummer:
**WO 2008/074518 (26.06.2008 Gazette 2008/26)**

(54) **VERFAHREN BZW. OFDM-VORRICHTUNG ZUR SC-FDMA-DATENÜBERTRAGUNG**

METHOD AND/OR OFDM DEVICE FOR SC-FDMA DATA TRANSMISSION

PROCÉDÉ ET/OU DISPOSITIF OFDM POUR LE TRANSFERT DE DONNÉES SC-FDMA

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.12.2006  EP 06026229**

(43) Veröffentlichungstag der Anmeldung:
**23.09.2009  Patentblatt 2009/39**

(73) Patentinhaber:
• **Nokia Solutions and Networks GmbH & Co. KG
81541 Munich (DE)**
• **Fraunhofer-Gesellschaft zur Förderung der angewandten Forschung e.V.
80686 München (DE)**

(72) Erfinder:
• **FORCK, Andreas
13587 Berlin (DE)**
• **GAEBLER, Holger
10559 Berlin (DE)**
• **HAUSTEIN, Thomas
81735 München (DE)**
• **HINDELANG, Thomas
82256 Fürstenfeldbruck (DE)**
• **JUNGNICKEL, Volker
10318 Berlin (DE)**
• **ZIRWAS, Wolfgang
81249 München (DE)**

(74) Vertreter: **Weidel, Gottfried et al
Nokia Solutions and Networks GmbH & Co. KG
CEF T&I IPR Patent Administration
80240 Munich (DE)**

(56) Entgegenhaltungen:
• **MYUNG H G ET AL: "SINGLE CARRIER FDMA FOR UPLINK WIRELESS TRANSMISSION" IEEE VEHICULAR TECHNOLOGY MAGAZINE, IEEE,, US, Bd. 1, Nr. 3, September 2006 (2006-09), Seiten 30-38, XP001249128 ISSN: 1556-6072**
• **"SC-FDMA (FDD / ÄTDDÜ)" 3RD GENERATION PARTNERSHIP PROJECT (3GPP); TECHNICAL REPORT (TR), XX, XX, Bd. VO.3.1, Oktober 2005 (2005-10), Seiten 29-37, XP003002200**
• **RITT, CATT, SHRCWC: "Offset DFT-Spread OFDM with Generalized Raised-Cosine Filters for Pulse Shaping" 3GPP TSG-RAN WG1 #44 MEETING, - 17. Februar 2006 (2006-02-17) XP002434731 Gefunden im Internet: URL:http://www.3gpp.org/ftp/Specs/html-inf o/TDocExMtg--R1-44--25406.htm>**
• **HUAWEI: "Optimum family of spectrum-shaping functions for PAPR reduction in SC-FDMA" 3GPP TSG RAN WG1 43, - 11. November 2005 (2005-11-11) XP002434732 Gefunden im Internet: URL:http://www.3gpp.org/ftp/tsg_ran/WG1_RL 1/TSGR1_43/Docs/>**
• **ALCATEL: "Effect of different ST/SF Coding and Mapping schemes on the PAPR of the SC-FDMA in E-UTRA Uplink" 3GPP TSG RAN WG1 45, - 12. Mai 2006 (2006-05-12) XP002434733 Gefunden im Internet: URL:http://www.3gpp.org/ftp/tsg_ ran/WG1_RL 1/TSGR1_45/Docs/>**

**Beschreibung**

Technisches Gebiet

Die Erfindung bezieht sich auf ein Verfahren zur SC-FDMA-Datenübertragung mit den oberbegrifflichen Merkmalen des Patentanspruchs 1 bzw. 12 auf eine OFDM-Vorrichtung mit einer Steuereinrichtung oder Komponenten, die ausgestaltet und/oder gesteuert sind zum Durchführen solcher Verfahren.

Stand der Technik

In mobilen Funksystemen, insbesondere in Mobilfunksystemen, sind Übertragungen in Aufwärtsrichtung, das heißt von einer mobilen Station zu einer ortsfesten Basisstation, oftmals durch die Leistung der mobilen Station bzw. eines entsprechenden Terminals beschränkt. Weitere beschränkende Faktoren sind eine zeitliche Dispersion und Interferenz. Tragbare Einrichtungen sollen einen geringst möglichen Leistungsverbrauch haben, dabei aber Daten über Entfernungen von mehreren Kilometern übertragen. Ein Leistungsverstärker in solchen tragbaren Einrichtungen ist diesbezüglich eine problematische Komponente, da die Linearität einer Leistungsverstärkung beide Aspekte, die Verstärkungsdynamik des Kanals und die Leistungsdynamik moderner funkgestützter Übertragungsschemata abdecken muss, welche auf Multi-Code- oder Multi-CarrierÜbertragung basieren (Multi-Carrier/Mehrträger). Eine Kombination von deren physikalischen Schichtressourcen, das heißt Codes oder Subträger, erhöht üblicherweise die Leistungsdynamik, obwohl die elementaren Wellenformen eine konstante Leistung haben, wie dies beispielsweise aus [1] J.-P. Javaudin, C. Dubuc, D. Lacroix, M. Earnshaw, "An OFDM evolution for the UMTS high speed downlink packet access," in Proc. IEEE "http://ieeexplore.ieee.org/xpl/RecentCon.jsp?punumber=9623", Vol. 2, pp. 846-850, 2004, bekannt ist.

Für leistungseffiziente Kommunikation ist eine minimale Leistungsdynamik im Allgemeinen wünschenswert. In dieser Hinsicht kann der Vorhalt (Back-Off) beim Arbeitspunkt des Verstärkers reduziert werden und die Effizienz des Verstärkers kann verbessert werden, wie dies aus [2] J. Tubbax, B. Come, L. Van der Perre, L. Deneire, S. Donnay, M. Engels, "OFDM versus Single Carrier with Cyclic Prefix: A system-based comparison," in Proc. IEEE "http://ieeexplore.ieee.org/xpl/RecentCon.jsp?punumber=7588", Vol. 2, pp. 1115-1119, 2001, bekannt ist. Mit demselben Verstärker können die Terminals eine größere Distanz überbrücken.

Für eine Single-Carrier- bzw. Einzelträger-Übertragung (SC-Transmission) ist bekannt, dass diese eine geringe Leistungsdynamik aufweist. Für eine einfache Entzerrung des Übertragungskanals kann sie mit einer zyklischen Erweiterung (engl.: cyclic extension) kombiniert werden, wie dies aus [3] C. Desset, B. Cöme, B. Debaillie, J. Driessche, J. Tubbax, W. Eberle, J.W. Weijers, "Constant Envelope Modulation Techniques for Non-Linear Front-Ends," verfügbar über: "http://www.imec.be/pacwoman/", Deliverables/WP4/WP4.2-IMEC-D4.2.1_constant_enveloppe_technique es-12-01-2004-V1.0.doc. und den darin genannten Referenzen bekannt ist. Neuere Informations-Theorie, wie [4] A. Goldsmith, P. Varaiya, "Capacity of fading channels with channel side information," IEEE Trans. Inf. Theory, Vol. 43, No. 6, Nov. 1997, zeigt, dass die Diversität in funkgestützten Kanälen ausgenutzt werden kann, indem die Signale im Spektralbereich mit der besten Übertragungsqualität gesendet werden.

Für die Anwendung der Frequenzbereichs-Resourcenaufteilung auf mehrere Nutzer (engl.: Frequency-Domain-Multi-User-Scheduling) wird die SC-Übertragung momentan in ein Mehrfachzugriffschema weiterentwickelt, welches die Vorteile von sowohl Mehrwege- als auch Mehr-Teilnehmer-Diversität ausnutzt. Folglich wurde SC-FDMA (Single-Carrier-Frequency-Division-Multiple-Access / Einzelträger-Frequenzaufteilungs-Mehrfachzugriff) in [5] 3GPP TR 25.814 V7.0.0 (2006-06), verfügbar über: "http://www.3gpp.org", für Übertragungen in Aufwärtsrichtung in der langfristigen Weiterentwicklung der zellularen Zugangsnetze(engl.: Long Term Evolution) im 3$^{rd}$ Generation Partnership Project (3GPP) vorgeschlagen.

Allgemein bekannt sind virtuelle Antennenkonzepte gemäß [8] D. Samardzija, P. Wolniansky, J. Ling, "Performance evaluation of the VBLAST algorithm in W-CDMA systems," in Proc. IEEE Vehicular Technology Conference, "http://ieeexplore.ieee.org/xpl/RecentCon.jsp?punumber=7588", Vol. 2, pp. 723-727, 2001, wobei sie nachfolgend sinngemäß zur korrekten Detektion der SC-FDMA Signale benutzt werden.

Ein beispielhafter Algorithmus zur Implementierung einer diskreten Fourier-Transformation unter Verwendung des so genannten Mutual Prime Factor Cyclic Algorithm (MPFCA) ist beispielsweise allgemein bekannt aus [10] S.D. Morgera, "Efficient synthesis and implementation of large discrete Fourier transforms," SIAM Journal Comput., Vol. 9, No. 2, pp. 251-272, 1980.

Weiterhin allgemein bekannt sind verschiedene Aspekte der Datenverarbeitung und Übertragung von Daten aus [6] K. Gentile, "The care and feeding of digital, pulse-shaping filters," verfügbar über: "http://www.rfdesign.com"; [7] H.G. Myung, J. Lim, D. J. Goodman, " Peak-to-average power ratio of single carrier FDMA signals with pulse shaping," Proc. IEEE PIMRC, 11-14 Sep. 2006, Helsinki, Finland und [9] H. Chen, V. Jungnickel, V. Pohl, C. von Helmolt, "A multicode space-frequency RAKE receiver," in: Proc. 38th Asilomar Conference on "http://ieeexplore.ieee.org/xpl/RecentCon.jsp?punumber=9626", Vol. 1, Page(s):672 - 676, 2004.

Somit wird derzeit eine SC-FDMA-Übertragung unter Verwendung einer DFT-Vorcodierungseinheit (DFT: Diskrete Fourier-Transformation) und eines direkten Abbildens des Ergebnisses auf Subträger des nachfolgenden IFFT-Eingangssignals (IFFT: Inverse Fast Fourier Transformation / Inverse schnelle Fourier-Transformation) erwogen. Dies bietet Vorteile zusammen mit spektral effizienten Modulationsformaten, wobei jedoch in Verbindung mit leistungseffizienten Modulations-Schemata die Vorcodierungsverstärkung reduziert oder sogar vernachlässigbar wird.

Das Dokument "SINGLE CARRIER FDMA FOR UPLINK WIRELESS TRANSMISSION", IEEE VEHICULAR TECHNOLOGY MAGAZINE, MYUNG H G ET AL von 2006-09, offenbart ein Verfahren und Vorrichtung zur SC-FDMA Datenübertragung, wobei das Gleichanteil-Datensignal am Rande des Frequenzbereichs abgebildet wird.

Aufgabe der Erfindung

Die Aufgabe der Erfindung besteht darin, ein Verfahren zur SC-FDMA-Datenübertragung vorzuschlagen, welches eine weniger aufwendige Datenverarbeitung und eine Reduzierung des Leistungsverbrauchs insbesondere mobiler Sendevorrichtungen ermöglicht. Vorgeschlagen werden soll außerdem eine OFDM-Vorrichtung mit einer Steuereinrichtung oder Komponenten, die ausgestaltet und/oder gesteuert sind zum Durchführen eines solchen Verfahrens.

Offenbarung der Erfindung

Diese Aufgabe wird gelöst durch das Verfahren zur SC-FDMA-Datenübertragung mit den Merkmalen des Patentanspruchs 1 bzw. 12 bzw. durch eine OFDM-Vorrichtung mit einer Steuereinrichtung öder Komponenten, die ausgestaltet und/oder gesteuert sind zum Durchführen solcher Verfahren. Vorteilhafte Ausgestaltungen sind Gegenstand abhängiger Ansprüche.

Bevorzugt wird demgemäß ein Verfahren zur SC-FDMA-Datenübertragung (SC-FDMA: Single Carrier-Frequency Division Multiple Access / Frequenzaufteilungs-Mehrfachzugriff auf einem Einzelträger), bei dem eine Abfolge von Eingangsdaten mittels einer diskreten Transformation als transformierte Datensignale kodierter und modulierter Datensignale auf erste Frequenzkanäle in einen ersten Frequenzraum auf eine erste Frequenzanzahl transformiert wird, die transformierten Daten bzw. Datensignale auf zweite Frequenzkanäle in einem zweiten Frequenzraum mit einer größeren zweiten Frequenzanzahl abgebildet werden, die transformierten Daten auf den zweiten Frequenzkanälen mittels einer Rücktransformation rücktransformiert werden und derart rücktransformierte Datensignale zur Übertragung bereitgestellt werden. Ausgehend davon werden die transformierten Datensignale in einen Frequenzbereich der zweiten Frequenzkanäle derart abgebildet, dass ein Gleichanteil der transformierten Datensignale mittig innerhalb des zugewiesenen Frequenzbereichs im zweiten Frequenzraum abgebildet wird. Dabei wird unter Abbilden insbesondere eine direkte Übertragung durch Kopieren, ein Verschieben aus einem Speicher in Speicherplätze eines anderen Speichers und optional auch eine Abbildung unter Zuhilfenahme einer Abbildungsmatrize verstanden.

Der Frequenzbereich der zweiten Frequenzkanäle wird bevorzugt durch eine insbesondere direkt aufeinanderfolgende Anzahl der zweiten Frequenzkanäle gleich der ersten Frequenzanzahl der transformierten Datensignale gebildet.

Die transformierten Datensignale werden bevorzugt auf zueinander insbesondere direkt benachbarte Frequenzkanäle der zweiten Frequenzkanäle abgebildet.

Die transformierten Datensignale können zyklisch verschoben abgebildet in den Frequenzbereich der zweiten Frequenzkanäle abgebildet werden. Auf einfache Art und Weise kann dies durch eine Verschiebeoperation innerhalb eines Speichers oder Speicherbereichs durchgeführt werden. Aufwendiger aber trotzdem hinsichtlich des Aufwands noch vorteilhaft ist aber z.B. auch eine Abbildung unter Einsatz z.B. einer Abbildungsmatrize.

Eine erste Hälfte der transformierten Datensignale kann einschließlich des Gleichanteils in dem Frequenzbereich der zweiten Frequenzkanäle einer zweiten Hälfte der transformierten Datensignale nachfolgend abgebildet werden. Dabei wird bevorzugt die erste Hälfte der transformierten Datensignale einschließlich dem Gleichanteil auf die ersten der zweiten Frequenzkanäle und die zweiten Hälfte der transformierten Datensignale auf die letzten der zweiten Frequenzkanäle abgebildet und nachfolgend eine gemeinsame zyklische Verschiebung aller benutzen Frequenzkanäle auf den zugewiesenen Frequenzbereich durchgeführt.

Die transformierten Datensignale werden bevorzugt zur Abbildung in den Frequenzbereich der zweiten Frequenzkanäle derart spektral erweitert, dass im zweiten Frequenzraum Redundanz entsteht. Bevorzugt werden beim Erweitern die transformierten Datensignale als ein erster Block in den Frequenzbereich der zweiten Frequenzkanäle abgebildet und die transformierten Datensignale als ein weiterer Block redundant hinter dem ersten Block in den Frequenzbereich der zweiten Frequenzkanäle abgebildet, wobei der Gleichanteil im Übergangsbereich der beiden Blöcke abgebildet wird. Der Begriff des Erweiterns ist dabei breit zu verstehen, auch im Sinne eines Spreizens, wobei dies nicht auf das aus dem Mobilfunk für sich bekannten Spreizen beschränkt ist. Insbesondere ist darunter auch zu verstehen, dass das Spektrum, in dem die Datensignale gesendet werden, aufgeweitet wird durch eine periodische Wiederverwendung der transformierten Datensignale, so dass im zweiten Frequenzraum eine Redundanz hinzugefügt wird.

Bevorzugt wird im Frequenzbereich eine zusätzliche Filterung durchgeführt.

Bevorzugt wird insbesondere auch ein Verfahren zum Verarbeiten gemäß einem derartigen Verfahren übertragener Daten, bei dem die übertragenen Datensignale mittels einer Transformation in den Frequenzbereich transformiert, mittels umgekehrter Verfahrensweise auf erste Frequenzkanäle eines ersten Frequenzraums auf die erste Frequenzanzahl abgebildet und mittels einer Rücktransformation rücktransformiert werden.

Für die Transformation und die Rücktransformation kann mit Blick auf den geringen Datenverarbeitungsaufwand vorteilhaft eine Fouriertransformation, insbesondere eine diskrete oder schnelle Fouriertransformation verwendet werden.

Äquivalent dazu bevorzugt wird ein Verfahren zur SC-FDMA-Datenübertragung, bei dem eine Abfolge von Eingangsdaten bzw. eine Folge von Datensignalen mit einer Länge von Datenwerten bereitgestellt wird, eine dem entsprechende Anzahl N von Abtastwerte um einen Faktor zum Überabtasten erhöht wird und im Zeitbereich eine Multiplikation einer daraus gebildeten Einhüllenden mit einer mittleren Unterträgerschwingung oder mittleren Unterträgerfrequenz, insbesondere gemäß $\exp(j2\pi k N_{Mitte}/N)$, der Abfolge von Eingangsdaten durchgeführt wird. Nach dem Erhöhen der Anzahl der Abtastwerte wird insbesondere eine RRC-Filterung mit einem Filter-Koeffizienten durchgeführt wird, wobei der Wert des Filterkoeffizienten $\alpha$ vorzugsweise im Bereich von $0,5 \leq \alpha < 1,0$, insbesondere im Bereich von $0,6 \leq \alpha \leq 0,8$ gesetzt wird. Vor der Multiplikation wird zweckmäßigerweise eine Sendeabfolge der Daten herausgenommen.

Die zu übertragenden Daten werden besonders bevorzugt als mittels BPSK oder QPSK modulierte Daten übertragen. Jedoch können auch mit anderen Modulationsverfahren verarbeitete Daten mit einem solchen Verfahren übertragen werden, wobei gemäß erster Untersuchungen insbesondere bei Modulationsverfahren mit konstanter Amplitude ein besonders vorteilhaftes Ergebnis gegenüber bekannten Verfahren erzielbar ist.

Die vorliegende Verfahrensweise bzw. Vorrichtung betrifft somit eine vollständige Sende-Empfangs-Kette für eine SC-FDMA-Übertragung über funkgestützte Mehrwege-Fading-Kanäle in welchen eine zusätzliche spektrale Erweiterung und Kompression verwendet wird wie auch eine spezielle Abbildung von Signalen auf die Subträger in der gewünschten Ressourceneinheit. Dadurch kann im Vergleich zu der im 3GPP erörterten Lösung eine weitere Reduzierung der Leistungsdynamik erzielt werden.

Mit einer solchen Verfahrensweise wird somit ein entscheidendes Problem beim Carrier-Mapping, das heißt Abbilden auf Träger einer Übertragungsressource gelöst. Zwar wird nachteilhaft die Bandbreite, welche zur Übertragung erforderlich ist, geringfügig erhöht, dabei wird jedoch vorteilhaft ermöglicht, dass eine beliebig skalierbare Bandbreite verwendet wird. Ein wesentlicher Vorteil ist eine deutliche Verbesserung des Spitzen-zu-Durchschnittsleistungs-Verhältnisses.

Kurze Beschreibung der Zeichnung

Ein Ausführungsbeispiel wird nachfolgend anhand der Zeichnung näher erläutert. Es zeigen:

Fig. 1    schematische Abbildungen zur Veranschaulichung verschiedener Datenverarbeitungsschritte zur Vorbereitung einer Datenübertragung,

Fig. 2    eine gegenüber Fig. 1 alternative Verfahrensweise,

Fig. 3    eine Abfolge von beispielhaften Komponenten zur Umsetzung einer derartigen Datenverarbeitung mit einer Filterung im Zeitbereich zur Bereitstellung zu übertragender Daten,

Fig. 4    Komponenten einer Empfängereinrichtung zum Empfangen von gemäß Fig. 3 verarbeiteten Daten,

Fig. 5    eine senderseitige Anordnung von Komponenten gemäß einer alternativen Ausführungsform,

Fig. 6    empfängerseitige Komponenten zur Verarbeitung eines gemäß Fig. 5 bereitgestellten Datensignals, und

Fig. 7    Kurven zur Veranschaulichung der Effizienz solcher Verfahrensweisen.

Ausführung der Erfindung

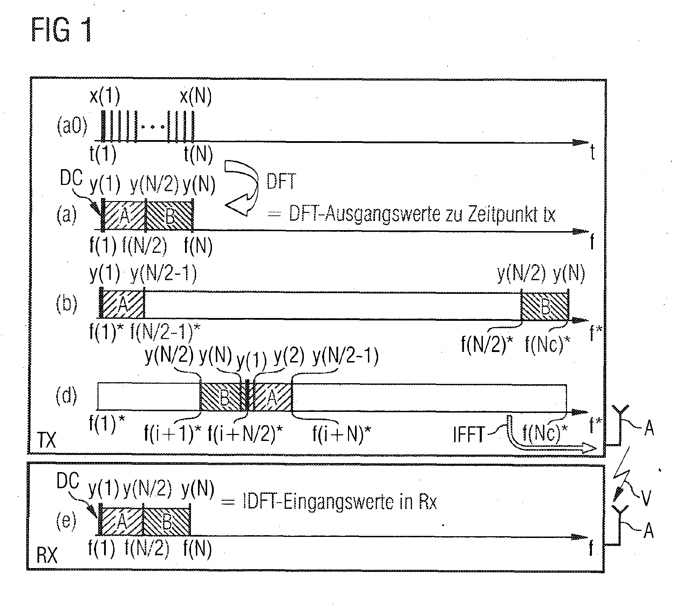

Fig. 1 zeigt eine erste Verfahrensweise zur Verarbeitung von Daten, welche über eine SC-FDMA-Übertragung von einer senderseitigen Einrichtung TX zu einer empfängerseitigen Einrichtung RX übertragen werden. Bei der senderseitigen Einrichtung TX handelt es sich um ein vorzugsweise mobiles Terminal in Art beispielsweise eines Mobilfunkgerätes. Bei der empfängerseitigen Einrichtung RX handelt es sich vorzugsweise um eine ortsfeste Station, insbesondere eine Basisstation eines Mobilfunknetzes. Die Übertragung zwischen der senderseitigen Einrichtung TX und der empfängerseitigen Einrichtung RX erfolgt vorzugsweise, jedoch nicht notwendig, über eine funkgestützte Verbindung bzw. über eine Funkschnittstelle V, welche über jeweils diesen beiden Einrichtungen TX, RX zugeordnete Antennen aufgebaut wird. Sowohl die senderseitige Einrichtung TX als auch die empfängerseitige Einrichtung RX umfassen üblicherweise eine Vielzahl für sich bekannter Komponenten, welche vorzugsweise auch zur Durchführung der beschriebenen bevorzugten Verfahrensweisen ausgestaltbar und/oder programmierbar sind. Insbesondere handelt es sich bei derartigen Komponenten um Speicherelemente, Prozessoren und gegebenenfalls weitere Schaltungselemente.

In einem vorbereitenden Verfahrensschritt a0 wird eine Abfolge von Eingangsdaten x(i), i = 1, 2, 3, ..., N in vorzugsweise zeitlicher Abfolge, das heißt zu diskreten Zeitpunkten t(1), ..., t(N) bereitgestellt, wie dies schematisch über der Zeit t skizziert ist. Dabei handelt es sich um als modulierte und vorzugsweise auch als codierte Datensignalen bereitgestellte Eingangsdaten x(i).

In einem ersten eigentlichen Verfahrensschritt a wird diese Abfolge von diskreten Eingangsdaten x(1), ..., x(N) in einen ersten Frequenzraum auf eine erste Frequenzanzahl erster Frequenzkanäle f(1), f(2), f(3), ..., f(N) transformiert, wobei die Anzahl der Frequenzkanäle vorzugsweise der Anzahl N der Abtastwerte entspricht. Dies erfolgt mittels einer Transformation der Eingangsdaten x(i), wobei für eine solche Transformation der Einsatz einer schnellen oder vorzugsweise einer diskreten Fourier-Transformation DFT bevorzugt wird. Dargestellt ist dies durch einen zusammenhängenden Block über der Frequenz f des ersten Frequenzraums für einen bestimmten Zeitpunkt tx. Im Falle des Einsatzes einer diskreten Fourier-Transformation DFT und insbesondere im Falle des Einsatzes einer schnellen Fourier-Transformation entspricht dabei die Anzahl der ersten Frequenzkanäle f(1), ..., f(N/2), ..., f(N) der Anzahl N mit der Abfolge von Eingangsdaten x(1), ..., x(N). In für Fourier-Transformationen üblicher Art und Weise entspricht dabei der erste transformierte Datenwert y(1) in dem ersten Frequenzkanal f(1) einem Gleichanteil DC bzw. Gleichspannungsanteil.

In einem zweiten Verfahrensschritt (b) wird der zusammenhängende Block in einen ersten Block A und in einen zweiten Block B untergliedert. Nachfolgend findet eine Abbildung der transformierten Datensignale bzw. Daten y(i) auf zweite Frequenzkanäle f(1)*, f(2)*, ..., f(N)*, ..., f(Nc)* in einem zweiten Frequenzraum mit einer größeren zweiten Frequenzanzahl Nc als der Frequenzanzahl, entsprechend der Anzahl N, des ersten Frequenzraums statt. Die Abbildung erfolgt dabei so, dass die transformierten Datenwerte y(1), ..., y(N/2-1) des ersten Blocks A auf insbesondere direkt zueinander benachbarte Frequenzkanäle f(1)*, ..., f(N/2-1)* des zweiten Frequenzraums abgebildet werden und die einander benachbarten transformierten Daten y(N/2), ..., y(N) des zweiten Blocks B auf ebenfalls insbesondere direkt zueinander benachbarte Frequenzkanäle f(N/2)*, ..., f(Nc)* des zweiten Frequenzraums abgebildet werden.

Im Fall der beispielhaften Verfahrensweise gemäß Fig. 1 erfolgt die Abbildung in den zweiten Frequenzraum dabei derart, dass die transformierten Daten y(1), ..., y(N/2-1) des ersten Blocks A auf die entsprechende Anzahl der ersten Frequenzkanäle f(1)*, ..., f(N/2-1)* des zweiten Frequenzraums abgebildet werden und die transformierten Daten y(N/2), ..., y(N) des zweiten Blocks B auf die letzten bzw. höchstwertigen Frequenzkanäle f(N/2)*, ..., f(Nc)* des zweiten Frequenzraums abgebildet werden, wie dies über der Frequenz f* des zweiten Frequenzraums skizziert ist. Durch diese Abbildung liegen die beiden Frequenzblöcke aus Sicht eines Algorithmus zur Durchführung einer insbesondere schnellen Fourier-Transformation oder einer diskreten Fourier-Transformation als ein wieder zusammenhängender Block, wobei die transponierten Daten y(N/2), ..., y(N) des zweiten Blocks B nun vor den transponierten Daten y(1), ..., y(N/2-1) des ersten Blocks A liegen. Insbesondere ist in einem solchen Gesamtblock der Gleichanteil DC bzw. der erste Datenwert y(1) mittig zwischen den übrigen Datenwerten der beiden Blöcke B, A angeordnet bzw. abgebildet.

In einem optionalen dritten Verfahrensschritt (d) erfolgt eine weitere Abbildung der transformierten und auf den zweiten Frequenzbereich umgesetzten Daten y(N/2), ..., y(N), y(1), ... y(N/2-1) in einen für eine nachfolgende Übertragung bevorzugten Frequenzbereich f(i+1)*, ..., f(i+N/2)*, ..., f(i+N)*. Bei diesem Bereich kann es sich beispielsweise um einen Frequenzbereich handeln, welcher auf der zu verwendenden Funkschnittstelle eine im Vergleich zu sonstigen Frequenzbereichen besonders geringe Störung erwarten lässt. Möglich ist auch eine entsprechende Verschiebung in einen speziellen Frequenzbereich, der für die sendende Einrichtung belegt wurde.

Nachfolgend wird eine inverse Fourier-Transformation, insbesondere eine inverse diskrete Fourier-Transformation oder eine inverse schnelle Fourier-Transformation IFFT des zweiten Frequenzraums, das heißt der gesamten Daten über den zweiten Frequenzkanälen f(1)*, ..., f(Nc)*, durchgeführt, um die transformierten und abgebildeten Daten in den Zeitbereich zurückzutransformieren und im Zeitbereich als zu übertragende Signal bzw. Daten bereitzustellen bzw. über die Funkschnittstelle V zu übertragen.

Während eine besonders bevorzugte Verfahrensweise darin besteht, dass im zweiten Schritt eine Abbildung der transponierten Daten y(N/2), ..., y(N) des zweiten Blocks B auf die höherwertigen Frequenzkanäle und nachfolgend eine einfache zyklische Verschiebung der gesamten transformierten Daten in den für die Übertragung gewünschten Frequenzbereich beschrieben wird, ist prinzipiell auch eine direkte Abbildung der in den ersten Frequenzbereich transformierten Daten y(1), ..., y(N) in den gewünschten Frequenzbereich f(i+1)*, ..., f(i+N)* des zweiten Frequenzbereichs möglich. Die spezielle Anordnung mit dem Gleichanteil bzw. dem ersten transponierten Datenwert y(1) in mittiger Position zwischen den übrigen Datenwerten kann dabei optional auch durch Einsatz einer entsprechenden Abbildungsmatrize durchgeführt werden.

In der empfängerseitigen Einrichtung RX werden die derart übertragenen Daten entsprechend zurück transformiert und zurück abgebildet, wozu wiederum eine Fourier-Transformation und nachfolgend eine entsprechende Rückabbildung angewendet wird. Die dadurch transformierten und zurück abgebildeten Daten weisen dann wieder den Gleichanteil DC als ersten Datenwert y(1) über einem ersten Frequenzkanal f(1) im ersten Frequenzraum und einen höchstwertigen Datenwert y(N) über einem entsprechenden Frequenzkanal f(N) im ersten Frequenzraum auf. Natürlich ist davon auszugehen, dass bei dieser Rekonstruktion nicht exakt die gleichen Daten bereitgestellt werden, welche im ersten Verfahrensschritt a senderseitig erzeugt wurden, da auf der Übertragungsstrecke üblicherweise Veränderungen und Verluste im übertragenen Signal auftreten. Ein Teil dieser Veränderungen wird durch die Kanalentzerrung rückgängig gemacht, jedoch verbleibt eine mehr oder weniger starke Veränderung des Rauschens. Ohne Rauschen werden die Sendesignale im zweiten Frequenzbereich jedoch vollständig rekonstruiert bevor der spezielle Detektionsprozess für SC-FDMA angewendet wird. Diese in der empfängerseitigen Einrichtung RX fourier-transformierten, entzerrten und und rückabgebildeten Datensignale bzw. Daten y(1), ..., y(N) werden hierbei als Eingangswerte für eine inverse Fourier-Transformation, beispielsweise eine inverse diskrete Fourier-Transformation IDFT bereitgestellt.

Natürlich kann eine zusätzliche Datenverarbeitung in allen Verfahrensstadien durchgeführt werden. Insbesondere kann eine Datenfilterung im Frequenzbereich vorgenommen werden. Auch sonstige in der Datenverarbeitung von über eine Funkschnittstelle zu übertragenden Daten bekannte Verfahren zur Optimierung des Signals und/oder zur Zuweisung bestimmter Zeitschlitze, Codes und/oder Frequenzen können in für sich bekannter Art und Weise verwendet und mit der anhand der beschriebenen Verfahrensschritte beschriebenen Datenverarbeitung kombiniert angewendet werden.

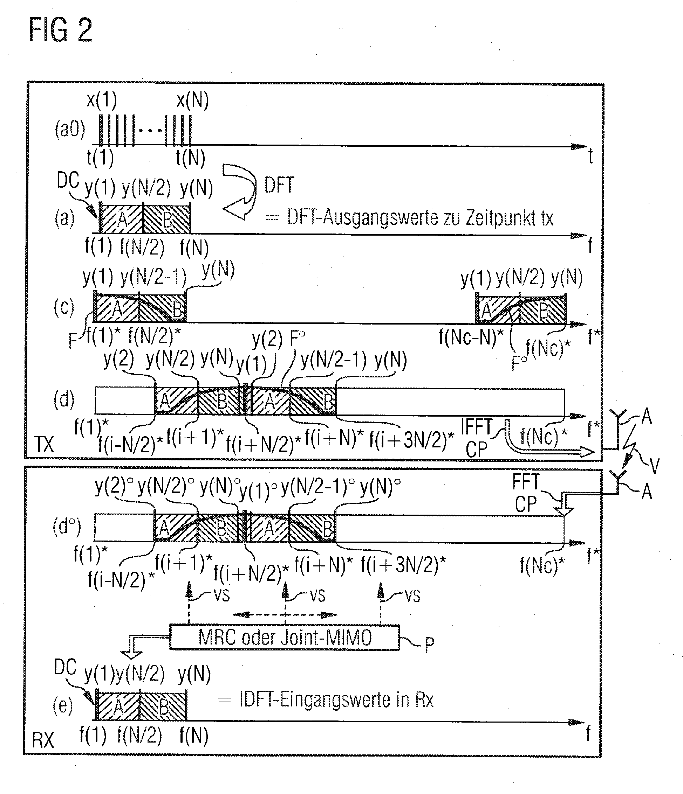

Anhand Fig. 2 ist eine zweite beispielhafte Verfahrensweise beschrieben, wobei nachfolgend lediglich auf Unterschiede der ersten Verfahrensweise eingegangen wird und bezüglich der weiteren Aspekte auf die Ausführungen zu Fig. 1 verwiesen wird.

Gemäß Fig. 2 besteht der dortige zweite Verfahrensschritt c darin, eine Erweiterung der transformierten diskreten Daten y(1), ..., y(N) bei der Abbildung in den zweiten Frequenzraum oder nach dieser Abbildung derart vorzunehmen, dass Redundanz entsteht. Wie dargestellt, werden dazu die transformierten Daten y(1), ..., y(N) vollständig auf die ersten N-Frequenzkanäle f(1)*, ..., f(N/2)* des zweiten Frequenzbereichs gesetzt. Zusätzlich werden die gesamten transformierten Daten y(1), ..., y(N) auf die letzten N-Frequenzkanäle f(Nc-N)*, ..., f(Nc)* des zweiten Frequenzbereichs gesetzt. Dadurch wird wiederum bewirkt, dass der Gleichanteil y(1) mittig zwischen den übrigen transformierten und abgebildeten Daten zu liegen kommt. Vorzugsweise wird bei der Abbildung auf die hinteren Frequenzkanäle mit der Anzahl N der Gleichanteil DC bzw. y(1) nicht mit übertragen oder durch eine Fielterfunktion F° ausgefiltert.

Optional können in dem dritten Verfahrensschritt d die gesamten transformierten, abgebildeten und redundanten erweiterten Daten y(2), ..., y(M), y(1), y(2), ..., y(N) wieder in einen für die Übertragung gewünschten Frequenzbereich innerhalb des zweiten Frequenzraums abgebildet, vorzugsweise zyklisch verschoben werden.

Empfängerseitig erfolgt in der empfängerseitigen Einrichtung RX eine Transformation in den Frequenzbereich, so dass in einem entsprechenden empfängerseitigen Verfahrensschritt d° abgesehen von Veränderungen durch die eigentliche Übertragung idealerweise die Daten bereitstehen, die nach dem dritten senderseitigen Verarbeitungsschritt d bereitstehen. Aus diesen Daten erfolgt eine Rückabbildung auf die Frequenzanzahl der ersten Frequenzkanäle f(1), ..., f(N) des ersten Frequenzraums derart, dass der Gleichanteil DC wieder als erster Datenwert y(1) dem ersten Frequenzträger f(1) zugeordnet wird.

Zur Beseitigung der Redundanz kann in für sich bekannter Art und Weise eine Maximalverhältniskombination MRC (Maximum Ratio Combining) oder eine so genannte Joined MIMO (Multiple Input Multiple Output) eingesetzt werden. So kann die Rekonstruktion beispielsweise durch drei Abgriffe vs erfolgen, welche im Abstand der Frequenzanzahl bzw. Anzahl N die Daten des zweiten Frequenzbereichs f* abgreifen und den entsprechenden Datenwert im ersten Frequenzbereich der Frequenz f rekonstruieren. Vorzugsweise kann eine solche Rekonstruktion in einem Prozessor P durchgeführt werden, welcher auch zur sonstigen Datenverarbeitung in der empfängerseitigen Einrichtung eingesetzt wird. Letztendlich stehen so in einem zweiten dargestellten empfängerseitigen Verfahrensschritt e wieder Eingangswerte für eine inverse Fourier-Transformation, insbesondere inverse diskrete Fourier-Transformation IDFT bereit, um die Daten im Zeitbereich zurückzugewinnen.

Die Verfahrensweisen gemäß Fig. 1 und Fig. 2 sind somit eng an einer klassischen Realisierung des SC-FDMA-Konzeptes orientiert, wobei sie jedoch einen generischen DFT- und IDFT-Ansatz vorzugsweise in Verbindung mit einer spektralen Erweiterung und mit einer speziellen Trägerabbildung verwenden, um eine Übertragung bei jeglicher umsetzbarer Blockgröße ermöglichen zu können. Sofern eine zyklische Verschiebung stattfinden soll, kann eine effiziente Implementierung der DFT unter Verwendung eines zyklischen Algorithmus unter Ausnutzung eines gemeinsamen (engl.: Mutual) Primfaktors unter der Bezeichnung MPFCA durchgeführt werden, wie dies für sich genommen aus [10] bekannt ist. Praktisch umgesetzt ist eine 1200-Punkt DFT lediglich um einen Faktor von 4 oder mehr komplexer als eine ähnlich dimensionierte schnelle Fourier-Transformation mit 2048 Punkten.

Durchgeführt wird somit ein Abbildungs- und Rückabbildungsprozess in einer DFT-basierten SC-FDMA-Kette mit vorzugsweise einer spektralen Aufweitung bzw. Erweiterung. Skizziert sind in Fig. 1 und 2 Datenwerte x(1), ..., x(N) einer Zeitreihe eines vorbereitenden Datenschritts a0, welche mittels einer Fourier-Transformation in den Frequenzbereich umgesetzt werden, was anhand einer weiteren Darstellungszeile als erster Verfahrensschritt a skizziert ist. In einem nachfolgenden zweiten Verfahrensschritt erfolgt eine Abbildung der N Daten bzw. Datensignale auf einen größeren zweiten Frequenzbereich mit einer größeren Anzahl Nc von Subträgern bzw. Frequenzkanälen. Dabei kann eine spektrale Erweiterung in Verbindung mit insbesondere dem zweiten Verfahrensschritt c und vorzugsweise eine Filterung bzw. Multiplikation mit einem RRC-Spektrum (RRC: Route Raised Cosine) durchgeführt werden. Eine vorzugsweise zyklische Verschiebung erfolgt in einem nachfolgenden Verfahrensschritt, um zu den anhand des dritten Schritts d dargestellten Werten im Frequenzraum zu gelangen. Dabei werden die Werte bzw. Daten in das zum Senden zugewiesene Spektrum verlagert bzw. abgebildet.

In der empfängerseitigen Einrichtung RX wird das Signal des beispielsweise k-ten Teilnehmers als dem empfangenen übertragenen Signal aus dem Spektrum herausmaskiert. Im Falle einer redundanten Datenanordnung werden Signale auf den redundanten Subträgern unter Verwendung vorzugsweise des virtuellen Antennenkonzepts mit MRC oder gemeinsame MIMO-Signalverarbeitung rekonstruiert. Pro Datenstrom gegebenenfalls parallel zueinander übertragener Datenfolgen wird dann der resultierende Vektor der Länge bzw. Anzahl N in die inverse diskrete Fourier-Transformation geführt. Umsetzbar ist eine solche Verfahrensweise insbesondere bei einer Übertragung gemäß OFDM, wo ein Signal im Zeitbereich übertragen wird, wobei pro Sende-Träger, Nutzer, bzw. Sendestation ein bestimmter Spektrumsanteil im Frequenzbereich zugewiesen wird.

Ein Konzept gemäß Fig. 2 ermöglicht eine Umsetzung als Sender für schmale Bandbreiten, welcher einfach zu realisieren ist. Zwar kann das mathematisch äquivalente Prinzip der Filterung im Zeitbereich im Vergleich zur Umsetzung des Konzepts mit einer Verschiebung im Frequenzbereich gegebenenfalls zu Verzerrungen oder Störungen führen, jedoch ist für einfache Anwendungen und einfache Geräte immer noch eine ausreichend gute Verarbeitungsqualität der zu übertragenden bzw. übertragenen Daten erzielbar. Nachfolgend wird daher die vorstehend knapp beschriebene Ausführungsform detaillierter ausgeführt beschrieben.

Ein erster Aspekt wird die Realisierung kleinerer bzw. engbandingerer digitaler Fourier-Transformationen durch ein Überabtasten (engl. up-sampling) betrachtet. Ausgegangen wird davon, dass N die Blockgröße bzw. Anzahl der Abtastwerte der zu verarbeitenden Daten ist. Eine diskrete Fourier-Transformation (DFT) gemäß

$$x_k = \sum_{m=0}^{M-1} X_m e^{-j2\pi\frac{mk}{M}} \qquad\qquad (0)$$

verwendet M > N als aktuelle DFT-Größe. Ferner wird angenommen, dass M = N · F gilt, wobei F ein ganzzahliger Faktor zum Überabtasten ist. Nun kann die DFT der Größe bzw. Anzahl N durch Überabtasten der Sequenz realisiert werden mit $X_m = X_\alpha$, falls m = $\alpha$ · F gilt, oder mit anderenfalls $X_m = 0$ und mit der ganzen Zahl $\alpha$ = 0...N-1, woraufhin die Signale in die größere DFT der Größe M geführt werden und nur die ersten N Ausgangssignale weiterverarbeitet werden.

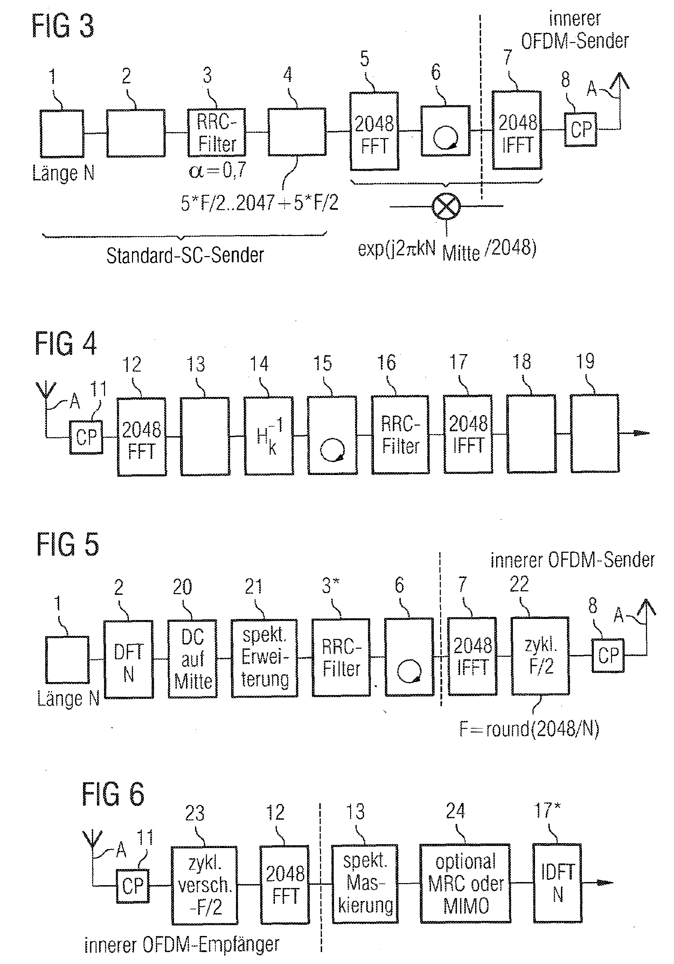

Gemäß dem Konzept eines klassischen SC-FDMA-Senders gemäß Fig. 3 wird dabei zuerst ein klassisches SC-FDMA-Signal geformt und dieses dann auf eine gegebene physikalische Ressourceneinheit in den Frequenzbereich abgebildet. Dabei wird die klassische Wellenform als ein Bezugsmerkmal für das neue Schema verwendet.

Eine klassische SC-FDMA-Wellenform wird durch Überabtasten der Datensequenz mit dem Faktor F in einem ersten Schritt erzeugt. Um einen Ansatz physikalsicher Ressourceneinheiten mit irgendeiner Bandbreite zu ermöglichen, kann die Anforderung aufgehoben werden, dass der Faktor F eine ganze Zahl ist. Dies kann durch die praktischen Erfordernisse motiviert sein, Blockgrößen zu unterstützen, welche kein ganzzahliger Bruchteil von $N_c$ sind. Der Faktor F zum Überabtasten wird dann angenähert durch F = round($N_c$/N), das heißt durch eine Rundung des Quotienten. Dieser Ansatz ist insbesondere dann von Interesse, wenn der Faktor F groß ist, das heißt N << $N_c$, wobei $N_c$ die Größe der schnellen Fourier-Transformation (FFT) im frontseitigen Teil des inneren OFDM-Senders ist. Anderenfalls würde die Wellenform gestört und die Leistungsfähigkeit kann herabgesetzt werden.

Im nächsten Schritt kann ein klassischer so genannter square-Root-Raised Cosine (RRC)-Filter im Zeitbereich eingesetzt werden. Eine Sequenz der Länge $N_c$ wird herausgenommen (engl. stamped out) in den Grenzen gemäß der vorstehenden Formel (0) für $x_k$. Start und Stopp werden so gewählt, dass die Sequenz verzögert wird um den Rundungsfaktor round (2,5 · F) Abtastwerte (samples), um zumindest den größten Teil der Filterverzögerung zu kompensieren. Das RRC-gefilterte Signal wird im Zeitbereich gestreckt bzw. expandiert und daher im Frequenzbereich engbandig. Nach dem Hindurchpassieren des Signals durch eine insbesondere schnelle Fourier-Transformation mit der Größe $N_c$ wird eine zyklische Verschiebung zur spektralen Position der physikalischen Ressourceneinheit durchgeführt. Letztendlich wird das Signal in die inverse Fourier-Transformation, insbesondere inverse schnelle Fourier-Transformation des inneren OFDM-Senders geführt. Die Abfolge der Fourier-Transformation, zyklischen Verschiebung und inversen Fourier-Transformation ist dabei im Idealfall mathematisch äquivalent zur Multiplikation der Einhüllenden mit der zentralen Subträger-Oszilliation in der physikalischen Ressource, das heißt einer Multiplikation gemäß exp(j2πKN$_M$/N).

Die Implementation des RRC-Filters im Zeitbereich gemäß Fig. 3 ist komplexer als im Frequenzbereich, wo die überabgetastete Sequenz direkt in die Fourier-Transformation und danach in die nachfolgende Filterung geführt werden würde. Mit einer Frequenzbereichsfilterung wird daher das Zeitbereichssignal nach der inversen Fourier-Transformation zyklisch um die gerundete Anzahl round(F/2) von Abtastwerten verschoben, um mit der zeitbereichs-gefilterten klassischen Wellenform in Phase zu gelangen. Die Wellenform sollte dabei mit jenen F Abtastwerten beginnen, welche dem ersten Symbol in dem Datenblock entsprechen.

Eine Ausgestaltung gemäß Fig. 3 ohne RRC-Filter entspräche einer Realisierung einer kleineren DFT mit einer großen mit einem überabgetasteten Signal, das heißt einem Signal mit Faktor. Dies entspricht zugleich dem Einsatz eines RRC-Filters 3 mit einem Wert $\alpha = 0$ bzw. einer Realisierung einer kleineren DFT mit spektral erweitertem Signal durch eine FFT mit beispielsweise einer Länge von 2048 Abtastwerten, wobei N z.B. einem Teiler von 2048 entspricht. Ein Wert von $\alpha = 1$ stellt eine Beschränkung auf einen gewünschten Bereich ohne benachbarte Symbole zum Abtastzeitpunkt neben dem Abtastzeitpunkt bzw. einem Nachklappern in Form einer Intersymbol-Interferenz dar. Prinzipiell kann $\alpha$ aber auch anders gewählt werden. Der Vorteil der Ausführungsform gemäß Fig. 3 ist insbesondere auch, dass keine Transformation in den Frequenzbereich erforderlich ist.

Anhand Fig. 3 ist ein erster beispielhafter Sender als eine senderseitige Einrichtung TX skizziert. Als Komponenten sind, wie auch in den weiteren Figuren, lediglich diejenigen Komponenten dargestellt sind, welche für das Verständnis des bevorzugten Verfahrensablaufs erforderlich sind. In üblicher Art und Weise kann deren Reihenfolge teilweise getauscht werden oder es können zusätzliche weitere Komponenten ergänzt werden. Unter einer Komponente sind verfahrenstechnische und/oder hardware-technische Elemente zu verstehen.

Dabei zeigt Fig. 3 einen beispielhaften klassischen SC-Sender, wobei eine Zeitbereichsfilterung verwendet werden kann, um SC-FDMA-Wellenformen zu erzeugen. Einleitend wird durch eine Burst-Quellen-Einheit 1 ein Burst bzw. eine Datenfolge mit einer Länge bzw. Anzahl von N Datenwerten bereitgestellt. Es folgt in einem zweiten Block bzw. einer zweiten Einheit 2 ein Überabtasten, wobei die Anzahl der Abtastwerte um den Faktor F zum Überabtasten als Überabtastfaktor erhöht wird. Der Überabtastfaktor kann beispielsweise durch die für sich bekannte Funktion F = round(2048/N) ermittelt werden. In einem dritten Block 3 folgt eine RRC-Filterung mit einem beispielhaften Filter-Koeffizienten $\alpha = 0,7$. Nachfolgend wird die Sendeabfolge herausgenommen (engl.: stamp out), was in einem vierten Block 4 geschieht. Bei einer Abbildung gemäß 5*F/2...2047+5*F/2 liegt dabei die steigende Flanke des ersten zu verarbeitenden Symbols im Fall von 2500 Abtastwerten noch im gewünschten Zeitfenster. Dabei wird berücksichtigt, dass durch den RRC-Filter gemäß dem dritten Block 3 eine Verzögerung von 3F erfolgt. Bei diesen ersten vier Komponenten handelt es sich im Wesentlichen um einen Standard-Einzelträger-Sender (Single-Carrier-Transmitter).

Nachfolgend erfolgt in einem fünften Block 5 eine Fourier-Transformation mit einer Anzahl von Stützstellen gleich der Anzahl Nc der hoch- bzw. aufwärts-abgetasteten Stützstellen des zweiten Blocks 2. In einem sechsten Block folgt die Abbildung auf den gewünschten Frequenzbereich für die Übertragung. Vorzugsweise nimmt der sechste Block 6 dazu eine zyklische Verschiebung vor. Schließlich folgt in einem siebten Block 7 eine inverse schnelle Fourier-Transformation IFFT und letztendlich wird in einem achten Block 8 ein zyklischer Präfix CP angesetzt, indem beispielsweise die letzten 128 Abtastwerte zusätzlich vorne an die Datenfolge angesetzt werden. Die Blöcke 7 und 8 bilden einen inneren OFDM-Sender. Die Blöcke 5 bis 7 können dabei auch ausgedrückt werden durch die Funktion $\exp(j2\pi N_{Mitte}/2048)$.

Fig. 4 zeigt einen klassischen SC-FDMA-Empfänger mit einem Frequenzbereichsfilter, wobei dieser Empfänger als empfängerseitige Einrichtung RX zur Verarbeitung von übertragenen Daten ausgelegt ist, welche von einer Sendeanordnung gemäß Fig. 3 gesendet wurden.

Einleitend wird in einem inneren OFDM-Empfänger in einem ersten Block 11 der zyklische Präfix CP verarbeitet. Es folgt in einem zweiten Block 12 eine Fourier-Transformation, insbesondere eine schnelle Fourier-Transformation FFT mit der Anzahl der Stützstellen N, welche beim senderseitigen Verfahren verwendet wurden. In dem dritten empfängerseitigen Block 13 findet ein spektrales Ausmaskieren eines Teilnehmersignals des entsprechenden Teilnehmers k statt.

In einem vierten Block 14 erfolgt eine Entzerrung im Frequenzbereich. Nachfolgend wird eine Abbildung, insbesondere eine zyklische Verschiebung, in einem fünften empfängerseitigen Block 15 durchgeführt, bevor ein RRC-Filter zur Durchführung einer Mitten-Abtastung und Bereitstellung eines klassischen SC-Signals in einem sechsten empfängerseitigen Block 16 angewendet wird. In einem siebten empfängerseitigen Block wird wieder eine inverse schnelle Fourier-Transformation IFFT durchgeführt.

In einem achten empfängerseitigen Block findet ein AbwärtsAbtasten mit einem Abtastfaktor F als dem Faktor F zum Überabtasten statt, wobei eine Verzögerung berücksichtigt wird gemäß round(F/2). Das vom achten empfängerseitigen Block ausgegebene Signal bzw. die entsprechende Datenabfolge wird einem Detektor zugeführt.

Nach der Gleichrichtung (engl. equalization) wird dabei insbesondere eine umgekehrte zyklische Verschiebung in den Gleichanteils-Bereich durchgeführt und der empfängerseitige RRC-Filter wird im Frequenzbereich angewendet. Nach der inversen Fourier-Transformation, insbesondere inversen schnellen Fourier-Transformation, wird einmal mehr die gefilterte Einhüllende (engl. envelope) des Einzelträgersignals (SC-Signals) rekonstruiert, so dass insbesondere optimale Entscheidungen nach einem Abwärtsabtasten (engl. down-sampling) mit dem Faktor F zum Überabtasten und mit einer Verzögerung mit dem Rundungswert round(F/2) durchgeführt werden können. Anhand der Fig. 5 und 6 sind eine senderseitige bzw. eine empfängerseitige Einrichtung in alternativer Ausgestaltung skizziert, wobei Blöcke mit gleichen Bezugszeichen für eine gleiche oder ähnliche Funktion bzw. für einen gleichen oder ähnlichen Aufbau wie bei den Anordnungen gemäß Fig. 3 und 4 stehen. Entsprechend werden im Wesentlichen nur Unterschiede beschrieben.

Fig. 5 betrifft einen DFT-basierten Sender. Für spektral erweiterte SC-FDMA-Signale werden optional sowohl eine spektrale Erweiterung als auch eine Frequenzbereichs-RRC-Filterung durchgeführt. In einem ersten Block 1 wird wieder ein Datenburst bereitgestellt, welcher einem zweiten Block 5* zur Durchführung einer diskreten Fourier-Transformation mit einer Länge entsprechend der Anzahl N bzw. Frequenzanzahl des ersten Frequenzraums durchgeführt wird. In einem nachfolgenden dritten senderseitigen Block 20 wird ein Gleichanteil DC der Datenwerte auf den Mittenbereich abgebildet. In einem vierten senderseitigen Block findet optional eine spektrale Erweiterung statt. In einem fünften senderseitigen Block 3* findet im Frequenzbereich optional eine RRC-Filterung statt. Eine solche Filterung wird durchgeführt, da die Intensität der entsprechenden Datenwerte links und rechts vom Gleichanteil (DC) vorzugsweise abfallen soll. Insbesondere der dritte bis fünfte senderseitige Block 20, 21, 3* können auch untereinander in der Reihenfolge ausgetauscht werden. Berechnungen können insbesondere durch kommutative Matrixoperationen bzw. Matrizen-Multiplikationen durchgeführt werden.

In einem nachfolgenden sechsten Block 6 findet wieder eine zyklische Verschiebung als eine beispielhafte Abbildung statt. In einem siebten senderseitigen Block 7 wird wieder eine inverse schnelle Fourier-Transformation IFFT durchgeführt, deren Ausgangswerte einer zyklischen Verschiebung um die halbe Frequenzanzahl F/2 entspricht. Darstellbar ist dies durch die Gleichung bzw. Funktion F = round(2048/N) in einem Block 22. Letztendlich erfolgt das Anfügen des zyklischen Präfix in einem abschließenden Block 8. Die letzten drei Komponenten 7, 22, 8 bilden dabei einen inneren OFDM-Sender aus.

Empfängerseitig wird ein derart bereitgestelltes und übertragenes Signal gemäß Fig. 6 in einem IDFT-basierten Empfänger verarbeitet. Für spektral erweiterte SC-FDMA-Signale sind eine RRC-Filterung und eine spektrale Kombination optional vorgesehen.

Nach dem Anlegen der übertragenen und empfangenen Daten an einen ersten Block 11 zur Verarbeitung des zyklischen Präfix werden dessen Ausgangsdaten einer zyklischen Verschiebung um -F/2 in einem zweiten empfängerseitigen Block 23 unterzogen. Dessen Ausgangswerte werden einer schnellen Fourier-Transformation FFT in einem dritten empfängerseitigen Block 12 unterzogen. Diese drei ersten Blöcke bilden einen inneren OFDM-Empfänger.

In einem vierten empfängerseitigen Block 13 erfolgt wieder eine spektrale Ausmaskierung des Teilnehmersignals für den entsprechenden Teilnehmer. In einem fünften empfängerseitigen Block 24 erfolgt optional die MRC- oder Joint-MIMO-Verarbeitung der spektralen Kompression. Die Ausgangswerte dieses fünften empfängerseitigen Blocks 24 werden wiederum einer inversen diskreten Fourier-Transformation in einem abschließenden Block 17* mit einer Länge entsprechend der ersten Frequenzanzahl bzw. Anzahl N durchgeführt.

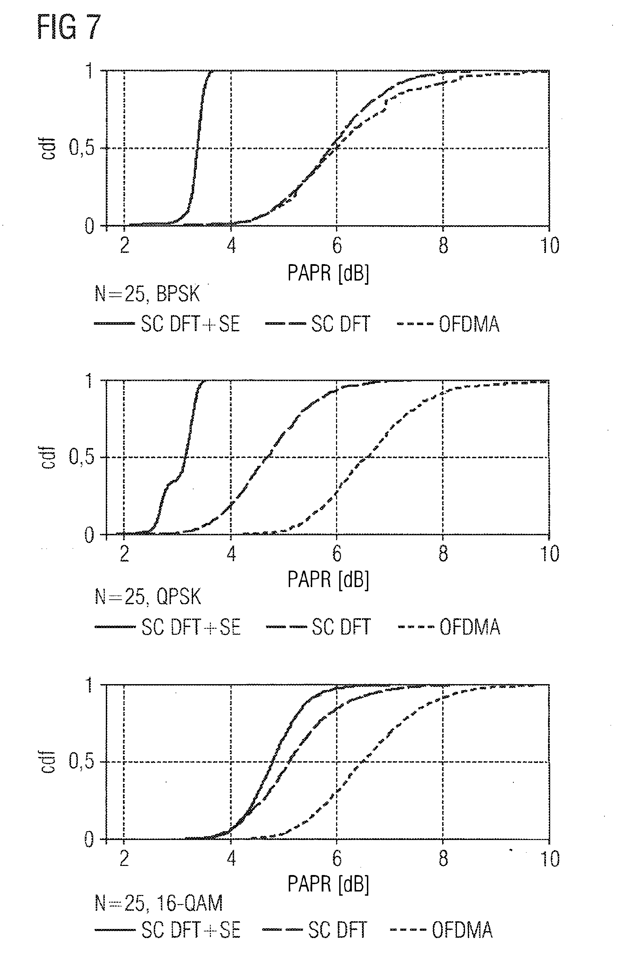

Der Hauptvorteil besteht darin, dass gemäß erster Versuche in dem hauptsächlichen Spitzenwert-zu-Durchschnittswert-Verhältnis (PAPR)eine Reduktion von zumindest bis zu 3 dB erzielt werden können, wobei dies zumindest für Modulations-schemata mit konstanter Amplitude, wie z.B. BPSK und QPSK gilt. Spektral effiziente Schemata mit Symbolkonstellationen die ungleiche Amplitude haben, beispielsweise 16-QAM und jenseits davon, zeigen keinen so großen Gewinn mehr. Dies ist beispielhaft anhand Fig. 7 skizziert, in welcher PAPR-Kurven für verschiedene Codierungsverfahren und verschiedene Übertragungsverfahren veranschaulicht sind. Der Preis für diese Gewinne liegt gemäß erster Untersuchungen für die übertragenen Signale in einer höher erforderlichen Bandbreite mit einem Faktor 5/4.

Ausnutzbar sind insbesondere mit Blick auf die Ausführungsform zu Fig. 3 auch Untersuchungen bezüglich der Beschränkungen mit sowohl Blick auf das mittlere Spitzenwert-zu-Durchschnittswert-Verhältnis und auf das Erzielen einer nicht-codierten Bit-Fehlerrate (BER) von $10^{-2}$, wenn die Bandbreite der physikalischen Ressource weiter reduziert wird durch Nullsetzen der Signale an den Endbereichen (engl. tails) des RRC-Spektrums. Teile dieser Endbereiche haben wenig Energie und tragen nicht so sehr zum PAPR und den Bit-Fehlerraten bei. Mit einer Größe eines Blocks und der physikalischen Ressource von 25 bzw. 31 Unterträgern liegen die Beschränkungen für PAPR und BER noch unter 0,25 bzw. 0,1 dB, wobei sie jedoch schnell ansteigen, wenn noch mehr Träger auf Null gesetzt werden. Daher zeichnet sich gemäß erster Untersuchungen ein praktisches Verhältnis von Block zu physikalischer Ressourceneinheit für die RRC-gefilterten SC-FDMA-Signale ab, was bei $25/31 \approx 4/5$ liegt.

Praktische FDMA-Systeme haben Nutzlastblöcke und physikalische Ressourceneinheiten mit festgelegten Größen, welche Multiple von einigen Elementarzahlen sind. Um in einem Raster einer gegebenen physikalischen Ressourceneinheit das SC-FDMA mit und ohne spektraler Expansion für BPSK/QPSK bzw. 16-QAM-Modulation mit Nutzlastblöcken der gleichen Größe zu kombinieren, kann die Code-Rate entsprechend adaptiert werden. Für die Definition von Übertragungsmodi in beispielsweise dem LTE-Uplink können daher die Code-Raten berücksichtigt werden, welche für BPSK/QPSK bei 4/5 der Code-Raten für 16-QAM liegen. Im Fall des aktuellen Standards mit 12 Trägern pro Resourcenblock liegen weitere geeignete Verhältnisse von Block zu physikalischer Ressourceneinheit für die RRC-gefilterten SC-FDMA-Signale z.B. bei 10/12, 9/12 oder 8/12.

Angemerkt wird, dass die Einhüllende und das Spitzenwert-zu-Durchschnittswert-Verhältnis PAPR auch durch das Modulationsformat beeinflusst werden. Geringes PAPR kann nur mit einer Konstant-Amplitudenmodulation erzielt werden. Anderenfalls werden die Verstärkungen in PAPR teilweise durch inhärente Leistungsdynamiken überdeckt. Dies ist in Fig. 7 veranschaulicht. Angemerkt wird, dass dabei BPSK- und QPSK-Modulationen eine konstante Einhüllende haben, während dies bei 16-QAM nicht der Fall ist.

Mit BPSK (Fig. 7 oben) und einer DFT-Vorcodierung alleine wird das mittlere PAPR nicht sehr reduziert. Nur nach dem Anlegen der spektralen Expansion wird das mittlere PAPR um 2,7 dB im Vergleich zu OFDMA deutlich reduziert.

Im Fall QPSK (Fig. 7 Mitte) steigt die DFT-Vorcodierung wieder zu 2 dB an und wird weiter um 1,5 dB nach dem Anlegen der spektralen Expansion und der RRC-Filterung verstärkt.

Jedoch haben bei 16-QAM-Modulation (Fig. 7 unten) bereits die Signalkonstellationen signifikante Amplitudenfluktuationen und die Leistungsdynamik bleibt so signifikant selbst mit spektraler Expansion. Während die DFT-Vorcodierung alleine das mittlere PAPR um grob 1,5 dB reduziert, hat die spektrale Expansion einen geringeren Effekt.

Möglich ist insbesondere auch die Empfänger so aufzubauen, dass die spektral erweiterte Version von SC-FDMA gemäß der vorliegend beschriebenen Verfahrensweise auch fortschrittliche Multi-Antennen-Techniken berücksichtigen können, was ausgenutzt werden kann, um die erforderliche Sendeleistung von tragbaren Einrichtungen weiter zu reduzieren. Diesbezüglich kann auf für sich bekannte virtuelle Antennenkonzepte gemäß z. B. [8] zurückgegriffen werden. Hierbei werden die bei der spektralen Erweiterung senderseitig redundant hinzugefügten Träger empfängerseitig als statistisch unabhängige Empfangssignale angesehen, die man auch als zusätzliche Empfangsantennen interpretieren kann. Dadurch kann man bekannte Mehrantennen-Signalverarbeitungsalgorithmen sinngemäß mit entsprechend erhöhter Anzahl virtueller Empfangsantennen einsetzen.

Letztendlich wird beispielhaft die Entwicklung beschrieben, welche zum Einschließen von MIMO bevorzugt wird. Dabei wird berücksichtigt, dass empfängerseitig empfangene Signale bzw. Datenfolgen auf Subträgern (n-M, n, n+M) redundante Informationen abhängig von dem einen und selben DFT-Ausgangssignal $x_n$ enthalten. Die empfangenen Signale können als virtuelle Antennensignale entsprechend den Ausführungen gemäß Fig. 6 betrachtet werden. Entsprechend können die Signale und Kanäle in Subvektoren

$$\mathbf{y}_j^n = \begin{pmatrix} y_j^{n-N} \\ y_j^n \\ y_j^{n+N} \end{pmatrix} \qquad \mathbf{h}_{ij}^n = \begin{pmatrix} h_{ij}^{n-N} \\ h_{ij}^n \\ h_{ij}^{n+N} \end{pmatrix} \qquad \mathbf{v}_j^n = \begin{pmatrix} v_j^{n-N} \\ v_j^n \\ v_j^{n+N} \end{pmatrix} \qquad (1)$$

geschrieben werden, wobei diese Subvektoren gestapelt werden können gemäß

$$\tilde{\mathbf{y}}_n = \begin{pmatrix} \mathbf{y}_1^n \\ \vdots \\ \mathbf{y}_{N_{Rx}}^n \end{pmatrix} \quad \tilde{\mathbf{H}}_n = \begin{pmatrix} \mathbf{h}_{11}^n & \cdots & \mathbf{h}_{1N_{Tx}}^n \\ \vdots & \vdots & \vdots \\ \mathbf{h}_{N_{Rx}1}^n & \cdots & \mathbf{h}_{N_{Rx}N_{Tx}}^n \end{pmatrix} \quad \tilde{\mathbf{v}}_n = \begin{pmatrix} \mathbf{v}_1^n \\ \vdots \\ \mathbf{v}_{N_{Rx}}^n \end{pmatrix} . \qquad (2)$$

Daher erhält man für jeden Subträger die $3N_{RX} \times 1$-Vektoren der empfangenen Signale $\tilde{y}_n$ und Rauschen $\tilde{v}_n$. Eine entsprechend gebildete $3N_{RX} \times N_{TX}$-Kanalmatrix $H_n$ und ein $N_{TX} \times 1$-Vektor für das übertragene Signal $x_n$ werden ebenfalls erhalten, wobei $N_{Tx}$ und $N_{Rx}$ die Anzahlen von Antennen beim Sender bzw. Empfänger sind. Die Übertragungsgleichung wird gegeben durch

$$\tilde{\mathbf{y}}_n = \tilde{\mathbf{H}}_n \cdot \tilde{\mathbf{x}}_n + \tilde{\mathbf{v}}_n . \qquad (3)$$

Dies ist ein klassisches MIMO-Problem für jedes Ausgangssignal der DFT bei dem Sender. In einfachen Empfängern kann man einen Minimum-Mean-Square-Error-(MMSE)-MIMO-Detektor verwenden, um die räumlich multiplexten Signale zu separieren. Eine optimale Detektion wird die diskrete Natur des Kodeworts am DFT-Eingang ausnutzen. Das Empfänger-Design beruht dann auf der Schätzung der wahrscheinlichsten Sendefolge (MLSE: Maximum-Likelihood-Sequence-Estimation) nach dem Prinzip des kleinsten quadratischen Abstands, und die optimale Signalverarbeitung ist ähnlich zum MIMO RAKE für MC-CDMA, was für sich genommen aus [9] H. Chen, V. Jungnickel, V. Pohl, C. von Helmolt, "A multicode space-frequency RAKE receiver," in: Proc. 38th Asilomar Conference on "http://ieeexplore.ieee.org/xpl/RecentCon.jsp?punumber=9626", Vol. 1, Page(s):672 - 676, 2004, bekannt ist.

**EP 2 103 070 B1**

**Patentansprüche**

1. Verfahren zur SC-FDMA-Datenübertragung, bei dem

   - eine Abfolge von Eingangsdaten x(i), i = 1, 2, 3, ..., N insbesondere mittels eines Modulators in eine Folge von Datensignalen gewandelt und in einer diskreten Transformation (DFT; FFT) als transformierte Datensignale y(i), i = 1, 2, 3, ... , N auf erste Frequenzkanäle f(1), f(2), f(3), ..., f(N) in einen ersten Frequenzraum auf eine erste Frequenzanzahl N transformiert wird,
   - die transformierten Datensignale y(i) auf zweite Frequenzkanäle f(1)*, f(2)*, f(3)*, ..., f(N)*, ..., f(Nc)* in einem zweiten Frequenzraum mit einer größeren zweiten Frequenzanzahl Nc abgebildet werden,
   - die transformierten Datensignale auf den zweiten Frequenzkanälen f(1)*, f(2)*, f(3)*, ..., f(N)*, ..., f(Nc)* mittels einer Rücktransformation (IFFT) rücktransformiert werden und
   - derart rücktransformierte Datensignale z(i) zur Übertragung bereitgestellt werden,
   **dadurch gekennzeichnet, dass**
   - die transformierten Datensignale y(i) in einen Frequenzbereich f(i+1)*, ..., f(i+N)* der zweiten Frequenzkanäle f(1)*, f(2)*, f(3)*, ..., f(N)*, ..., f(Nc)* derart abgebildet werden, dass ein Gleichanteil, y(1) bei f(1), der transformierten Datensignale y(i) mittig innerhalb des Frequenzbereichs f(i+1)*, ..., f(i+N)* abgebildet wird.

2. Verfahren nach Anspruch 1, bei dem der Frequenzbereich (f(i+1)*, ..., f(i+N)*) der zweiten Frequenzkanäle (f(1)*, f(2)*, f(3)*, ..., f(N)*, ..., f(Nc)*) durch eine insbesondere direkt aufeinanderfolgende Anzahl der zweiten Frequenzkanäle (f(i+1)*, ..., f(i+N)*) gleich der ersten Frequenzanzahl (N) der transformierten Datensignale (y(i)) gebildet wird.

3. Verfahren nach Anspruch 1 oder 2, bei dem die transformierten Datensignale (y(i)) auf zueinander insbesondere direkt benachbarte Frequenzkanäle (f(i+1)*, ..., f(i+N)*) der zweiten Frequenzkanäle (f(1)*, f(2)*, f(3)*, ..., f(N)*, ..., f(Nc)*) abgebildet werden.

4. Verfahren nach einem vorstehenden Anspruch, bei dem die transformierten Datensignale (y(i)) zyklisch verschoben abgebildet in den Frequenzbereich (f(i+1)*, ..., f(i+N)*) der zweiten Frequenzkanäle (f(1)*, f(2)*, f(3)*, ..., f(N)*, ..., f(Nc)*) abgebildet werden.

5. Verfahren nach einem vorstehenden Anspruch, bei dem eine erste Hälfte der transformierten Datensignale (y(i), i = 1, 2, ..., N/2) einschließlich dem Gleichanteil (yl) in dem Frequenzbereich (f(i+1)*, ..., f(i+N)*) der zweiten Frequenzkanäle (f(1)*, f(2)*, f(3)*, ..., f(N)*, ..., f(Nc)*) einer zweiten Hälfte der transformierten Datensignale (y(i), i = N/2, ..., N) nachfolgend abgebildet wird.

6. Verfahren nach Anspruch 5, bei dem die erste Hälfte der transformierten Datensignale (y(i), i = 1, 2, ..., N/2) einschließlich dem Gleichanteil (y(1)) auf die ersten der zweiten Frequenzkanäle (f(1)*, f(2)*,..., f(N/2)*) und die zweiten Hälfte der transformierten Datensignale (y(i), i = N/2, ..., N) auf die letzten der zweiten Frequenzkanäle (f(N-N/2)*, ..., f(Nc)*) abgebildet wird und nachfolgend eine zyklische Verschiebung auf den Frequenzbereich (f(i+1)*, ..., f(i+N)*) durchgeführt wird.

7. Verfahren nach einem vorstehenden Anspruch, bei dem die transformierten Datensignale (y(i), i = 1, 2, ..., N/2) zur Abbildung in den Frequenzbereich (f(i+1)*, ..., f(i+N)*, f(i+N+1)*, ..., F(i+2N)*) der zweiten Frequenzkanäle (f(1)*, f(2)*, f(3)*, ..., f(N)*, ..., f(Nc)*) derart spektral aufgeweitet werden durch eine periodische Wiederverwendung der transformierten Datensignale, dass im zweiten Frequenzraum eine Redundanz entsteht.

8. Verfahren nach Anspruch 7, bei dem beim Erweitern die transformierten Datensignale (y(i), i = 1, 2, ..., N/2) als ein erster Block (A) in den Frequenzbereich (f(i+1)*, ..., f(i+N)*) der zweiten Frequenzkanäle (f(1)*, f(2)*, f(3)*, ..., f(N)*, ..., f(Nc)*) abgebildet werden und die transformierten Datensignale (y(i), i = 1, 2, ..., N/2) als ein weiterer Block (B) redundant hinter dem ersten Block (A) in den Frequenzbereich (f(i+N+1)*, ..., F(i+2N)*) der zweiten Frequenzkanäle (f(1)*, f(2)*, f(3)*, ..., f(N)*, ..., f(Nc)*) abgebildet werden, wobei der Gleichanteil (y(1)) im Übergangsbereich der beiden Blöcke (A, B) abgebildet wird.

9. Verfahren nach einem vorstehenden Anspruch, bei dem im Frequenzbereich eine Filterung durchgeführt wird.

10. Verfahren zum Verarbeiten gemäß einem Verfahren nach einem vorstehenden Anspruch übertragener Daten, bei dem die übertragenen Datensignale (z(i)) mittels einer Transformation (FFT) in den Frequenzbereich transformiert, mittels umgekehrter Verfahrensweise auf erste Frequenzkanäle (f(1), f(2), f(3), ..., f(N)) eines ersten Frequenzraums auf die erste Frequenzanzahl (N) abgebildet und mittels einer Rücktransformation (IFFT) rücktransformiert werden.

11. Verfahren nach einem vorstehenden Anspruch, bei dem für die Transformation und die Rücktransformation eine Fouriertransformation, insbesondere eine diskrete oder schnelle Fouriertransformation (DFT; FFT) verwendet wird.

12. Verfahren zur SC-FDMA-Datenübertragung, bei dem

- eine Abfolge von Eingangsdaten x(i), i = 1, 2, 3, ..., N oder eine Folge von Datensignalen mit einer Länge von N Datenwerten bereitgestellt wird, **dadurch gekennzeichnet, dass**
- eine dem entsprechende Anzahl N von Abtastwerten um einen Faktor F zum Überabtasten erhöht wird und
- im Zeitbereich eine Multiplikation einer daraus gebildeten Einhüllenden mit einer mittleren Unterträgerschwingung oder mittleren Unterträgerfrequenz exp $(j2\pi kN_{Mitte}/N_c)$ der Abfolge von über-abgetasteten Eingangsdaten durchgeführt wird, wobei F = round $(N_c/N)$ und Nmitte die zentrale Subträger - Oszillation des physikalischen Ressourcen darstellt.

13. Verfahren nach Anspruch 12, bei dem nach dem Erhöhen der Anzahl der Abtastwerte eine RRC-Filterung mit einem Filter-Koeffizienten $(\alpha)$ durchgeführt wird.

14. Verfahren nach Anspruch 13, bei dem der Wert des Filter-koeffizienten $(\alpha)$ im Bereich von $0,5 \leq \alpha < 1,0$, insbesondere im Bereich von $0,6 \leq \alpha \leq 0,8$ gesetzt wird.

15. Verfahren nach einem der Ansprüche 12 bis 14, bei dem vor der Multiplikation eine Sendeabfolge der Daten herausgenommen wird.

16. Verfahren nach einem der Ansprüche 12 bis 15, zum Durchführen einer Funktionalität nach einem der Verfahren 1 bis 11.

17. Verfahren nach einem vorstehenden Anspruch, bei dem die zu übertragenden Datensignale mit einem Modulationsverfahren mit konstanter Amplitude, z.B. BPSK oder QPSK, übertragen werden.

18. OFDM-Vorrichtung mit einer Steuereinrichtung oder Komponenten, die ausgestaltet und/oder gesteuert sind zum Durchführen eines Verfahrens nach einem vorstehenden Anspruch.

**Claims**

1. Method for SC-FDMA data transmission, in which

- a succession of input data x(i), i = 1, 2, 3 ..., N is converted particularly by means of a modulator into a sequence of data signals and is transformed in a discrete transformation (DFT; FFT) as transformed data signals y(i), i = 1, 2, 3, ... N onto first frequency channels f(1), f(2), f(3), ..., f (N) in a first frequency space over a first number of frequencies N,
- the transformed data signals y(i) are mapped onto second frequency channels f(1)*, f(2)*, f(3)*, ... f(N)*, ... f(Nc)* in a second frequency space with a greater second number of frequencies Nc,
- the transformed data signals on the second frequency channels f(1)*, f(2)*, f(3)*, ... f(N)*, ... f(Nc)* are inverse-transformed by means of an inverse transformation (IFFT), and
- data signals z (i) inverse-transformed in this manner are provided for transmission,
**characterized in that**
- the transformed data signals y(i) are mapped into a frequency domain f(i+1)*, ..., f(i+N)* of the second frequency channels f(1)*, f(2)*, f(3)*, ..., f(N)*, ..., f (Nc) * such that a direct component, y(1) for f(1), of the transformed data signals y(i) is mapped centrally within the frequency domain f(i+1)*, ..., f(i+N)*.

2. Method according to Claim 1, in which the frequency domain (f(i+1)*, ... , f(i+N)*) of the second frequency channels (f(1)*, f(2)*, f(3)*, ..., f(N)*, ..., f(Nc)*) is formed by a, in particular, directly successive number of the second frequency channels (f(i+1)*, ..., f(i+N)*) equal to the first number of frequencies (N) of the transformed data signals (y(i)).

3. Method according to Claim 1 or 2, in which the transformed data signals (y(i)) are mapped onto, in particular, directly adjacent frequency channels (f(i+1)*, ..., f(i+N)*) from the second frequency channels (f(1)*, f(2)*, f(3)*, ..., f(N)*, ...,

f(Nc)*).

4. Method according to one of the preceding claims, in which the transformed data signals (y(i)) are mapped with a cyclic shift into the frequency domain (f(i+1)*, ..., f(i+N)*) of the second frequency channels (f(1)*, f(2)*, f(3)*, ..., f(N)*, ..., f(Nc)*).

5. Method according to one of the preceding claims, in which a first half of the transformed data signals (y(i), i = 1, 2, ..., N/2) is mapped, including the direct component (y1), in the frequency domain (f(i+1)*, ..., f(i+N)*) of the second frequency channels (f(1)*, f(2)*, f(3)*, ..., f(N)*, ..., f(Nc)*) following a second half of the transformed data signals (y(i), i = N/2, ..., N).

6. Method according to Claim 5, in which the first half of the transformed data signals (y(i), i = 1, 2, ..., N/2) is mapped, including the direct component (y(1)), onto the first instances of the second frequency channels (f(1)*, f(2)*, ..., f(N/2)*) and the second half of the transformed data signals (y(i), i = N/2, ..., N) is mapped onto the last instances of the second frequency channels (f(N-1/2)*, ..., f(Nc)*), and then a cyclic shift to the frequency domain (f(i+1)*, ..., f(i+N)*) is performed.

7. Method according to one of the preceding claims, in which the transformed data signals (y(i), i = 1, 2, ..., N/2) are subjected to such spectral expansion, for the purpose of mapping into the frequency domain (f(i+1)*, ..., f(i+N)*, f(i+N+1)*, ..., f(i+2N)*) of the second frequency channels (f(1)*, f(2)*, f(3)*, ..., f(N)*, ..., f(Nc)*), through periodic reuse of the transformed data Signals, that redundancy is produced in the second frequency space.

8. Method according to Claim 7, in which the extension involves the transformed data signals (y(i), i = 1, 2, ..., N/2) being mapped as a first block (A) into the frequency domain (f(i+1)*, ..., f(i+N)*) of the second frequency channels (f(1)*, f(2)*, f(3)*, ..., f(N)*, ..., f(Nc)*) and the transformed data signals (y(i), i = 1, 2, ..., N/2) being mapped as a further block (B) redundantly downstream of the first block (A) into the frequency domain (f(i+N+1)*, ..., f(i+2N)*) of the second frequency channels (f(1)*, f(2)*, f(3)*, ..., f(N)*, ..., f(Nc)*). with the direct component (y(1)) being mapped in the transition area between the two blocks (A, B).

9. Method according to one of the preceding claims, in which filtering is performed in the frequency domain.

10. Method for processing data transmitted in line with a method according to one of the preceding claims, in which the transmitted data signals (z(i)) are transformed by means of a transformation (FFT) into the frequency domain, are mapped by means of an inverse procedure onto the first frequency channels (f(1), f(2), f(3), ..., f(N)) in a first frequency space over the first number of frequencies (N) and are inverse-transformed by means of an inverse transformation (IFFT).

11. Method according to one of the preceding claims, in which a Fourier transformation, particularly a discrete or fast Fourier transformation (DFT; FFT), is used for the transformation and the inverse transformation.

12. Method for SC-FDMA data transmission, in which

- a succession of input data x(i), i = 1, 2, 3, ..., N or a sequence of data signals with a length of N data values is provided, **characterized in that**
- a corresponding number N of samples is increased by a factor F for the purpose of oversampling, and
- in the time domain an envelope formed therefrom is multiplied by a mean subcarrier oscillation or mean subcarrier frequency $\exp(j2\pi kN_{center}/N_c)$ for the succession of oversampled input data, wherein $F = round(N_c/N)$ and $N_{center}$ represents the central subcarrier oscillation of the physical resources.

13. Method according to Claim 12, in which the increase in the number of samples is followed by the performance of RRC filtering with a filter coefficient ($\alpha$).

14. Method according to Claim 13, in which the value of the filter coefficient ($\alpha$) is set in the range $0.5 \leq \alpha < 1.0$, particularly in the range $0.6 \leq \alpha \leq 0.8$.

15. Method according to one of Claims 12 to 14, in which the multiplication is preceded by the removal of a transmission sequence for the data.

**16.** Method according to one of Claims 12 to 15, for implementing a functionality according to one of Claims 1 to 11.

**17.** Method according to one of the preceding claims, in which the data signals to be transmitted are transmitted using a constant-amplitude modulation method, e.g. BPSK or QPSK.

**18.** OFDM apparatus having a control device or components which are designed and/or controlled for the purpose of carrying out a method according to one of the preceding claims.

**Revendications**

**1.** Procédé pour la transmission de données SC-FDMA, selon lequel :

- une séquence de données d'entrée x(i), i = 1, 2, 3, ..., N est convertie en une suite de signaux de données, notamment à l'aide d'un modulateur, et est transformée, dans une transformation discrète (DFT ; FFT), en tant que signaux de données transformés y(i), i = 1, 2, 3, ..., N, sur des premiers canaux de fréquences f(1), f(2), f(3), ..., f (N) en un premier espace de fréquences sur un premier nombre de fréquences N ;
- les signaux de données transformés y(i) sont appliqués sur de deuxièmes canaux de fréquences f(1)*, f(2)*, f(3)*, ..., f(N)*, ..., f(Nc)* dans un deuxième espace de fréquences avec un deuxième nombre de fréquences supérieur (Nc) ;
- les signaux de données transformés, sur les deuxièmes canaux de fréquences f(1)*, f(2)*, f(3)*, ..., f(N)*, ..., f(Nc)*, sont rétrotransformés au moyen d'une rétrotransformation (IFFT) et
- des signaux de données ainsi rétrotransformés z(i) sont mis à disposition pour être transmis,
**caractérisé en ce que**
- les signaux de données transformés y(i) sont appliqués de manière telle dans une gamme de fréquences f(i+1)*, ..., f(i+N)* des deuxièmes canaux de fréquences f(1)*, f(2)*, f(3)*, ..., f(N)*, ..., f(Nc)* qu'une partie égale, y(1) pour f(1), des signaux de données transformés y(i) est appliquée centralement dans les limites de la gamme de fréquences f(i+1)*, ..., f(i+N)*.

**2.** Procédé selon la revendication 1, selon lequel la gamme de fréquences (f(i+1)*, ..., f(i+N)*) des deuxièmes canaux de fréquences (f(1)*, f(2)*, f(3)*, ..., f(N)*, ..., f(Nc)*) est formée par un nombre, notamment en succession directe, des deuxièmes canaux de fréquences (f(i+1)*, ..., f(i+N)*) égal au premier nombre de fréquences (N) des signaux de données transformés (y(i)).

**3.** Procédé selon la revendication 1 ou 2, selon lequel les signaux de données transformés (y(i)) sont appliqués sur des canaux de fréquences (f(i+1)*, ..., f(i+N)*), notamment directement voisins les uns des autres, des deuxièmes canaux de fréquences (f(1)*, f(2)*, f(3)*, ..., f(N)*, ..., f(Nc)*).

**4.** Procédé selon une revendication précédente, selon lequel les signaux de données transformés (y(i)) sont appliqués avec décalage cyclique dans la gamme de fréquences (f(i+1)*, ..., f(i+N)*) des deuxièmes canaux de fréquences (f(1)*, f(2)*, f(3)*, ..., f(N)*, ..., f(Nc)*).

**5.** Procédé selon une revendication précédente, selon lequel une première moitié des signaux de données transformés (y(i), i = 1, 2, ..., N/2), y compris la partie égale (y1), est ensuite appliquée dans la gamme de fréquences (f(i+1)*, ..., f(i+N)*) des deuxièmes canaux de fréquences (f(1)*, f(2)*, f(3)*, ..., f(N)*, ..., f(Nc)*) d'une deuxième moitié des signaux de données transformés (y(i), i = N/2, ..., N).

**6.** Procédé selon la revendication 5, selon lequel la première moitié des signaux de données transformés (y(i), i = 1, 2, ..., N/2), y compris la partie égale (y(1)), est appliquée sur les premiers des deuxièmes canaux de fréquences (f(1)*, f(2)*, ..., f(N/2)*) et la deuxième moitié des signaux de données transformés (y(i), i = N/2, ..., N) est appliquée sur les derniers des deuxièmes canaux de fréquences (f(N-N/2)*, ..., f(Nc)*) et un décalage cyclique vers la gamme de fréquences (f(i+1)*, ..., f(i+N)*) est ensuite effectué.

**7.** Procédé selon une revendication précédente, selon lequel les signaux de données transformés (y(i), i = 1 , 2, ..., N/2) sont élargis spectralement de manière telle, aux fins de l'application dans la gamme de fréquences (f(i+1)*, ..., f(i+N)*, f(i+N+1)*, ..., F(i+2N)*) des deuxièmes canaux de fréquences (f(1)*, f(2)*, f(3)*, ..., f(N)*, ..., f(Nc)*), par une réutilisation périodique des signaux de données transformés, qu'il se produit une redondance dans le deuxième espace de fréquences.

**8.** Procédé selon la revendication 7, selon lequel, lors de l'élargissement, les signaux de données transformés (y(i), i = 1 , 2, ..., N/2) sont appliqués, en tant que premier bloc (A), dans la gamme de fréquences (f(i+1)*, ..., f(i+N)*) des deuxièmes canaux de fréquences (f(1)*, f(2)*, f(3)*, ..., f(N)*, ..., f(Nc)*) et les signaux de données transformés (y(i), i = 1, 2, ..., N/2) sont appliqués, en tant que bloc supplémentaire (B), de manière redondante après le premier bloc (A) dans la gamme de fréquences (f(i+N+1)*, ..., f(i+2N)*) des deuxièmes canaux de fréquences (f(1)*, f(2)*, f(3)*, ..., f(N)*, ..., f(Nc)*), la partie égale (y(1)) étant appliquée dans la zone de transition entre les deux blocs (A, B).

**9.** Procédé selon une revendication précédente, selon lequel un filtrage est effectué dans la gamme de fréquences.

**10.** Procédé pour le traitement de données transmises selon un procédé selon une revendication précédente, selon lequel les signaux de données transmis (z(i)) sont transformés au moyen d'une transformation (FFT) en la gamme de fréquences, appliqués au moyen d'un procédé inverse sur des premiers canaux de fréquences (f(1), f(2), f(3), ..., f(N)) d'un premier espace de fréquences sur le premier nombre de fréquences (N) et rétrotransformés au moyen d'une rétrotransformation (IFFT).

**11.** Procédé selon une revendication précédente, selon lequel est utilisée, pour la transformation et la rétrotransformation, une transformation de Fourier, et plus particulièrement une transformation de Fourier discrète ou rapide (DFT ; FFT).

**12.** Procédé pour la transmission de données SC-FDMA, selon lequel :

- une séquence de données d'entrée x(i), i = 1, 2, 3, ..., N ou une suite de signaux de données ayant une longueur de N valeurs de données est mise à disposition,
**caractérisé en ce que** :
- un nombre N de valeurs d'échantillonnage en conséquence est majoré d'un facteur F pour suréchantillonnage et
- dans la plage temporelle est effectuée une multiplication d'une enveloppante formée sur cette base par une oscillation moyenne de sous-porteuses ou une fréquence moyenne de sous-porteuses $\exp(j2\pi k N_{Mitte}/Nc)$ de la séquence de données d'entrée suréchantillonnées, F = round (Nc/N) et $N_{Mitte}$ étant l'oscillation centrale de sous-porteuses des ressources physiques.

**13.** Procédé selon la revendication 12, selon lequel est effectué, après l'augmentation du nombre de valeurs d'échantillonnage, un filtrage RRC avec un coefficient de filtrage ($\alpha$).

**14.** Procédé selon la revendication 13, selon lequel la valeur du coefficient de filtrage ($\alpha$) est forcée dans la plage de $0,5 \leq \alpha < 1,0$, et plus particulièrement dans la plage de $0,6 \leq \alpha \leq 0,8$.

**15.** Procédé selon l'une des revendications 12 à 14, selon lequel une séquence d'émission des données est retirée avant la multiplication.

**16.** Procédé selon l'une des revendications 12 à 15 pour exécuter une fonctionnalité selon l'un des procédés 1 à 11.

**17.** Procédé selon une revendication précédente, selon lequel les signaux de données à transmettre sont transmis au moyen d'un procédé de modulation à amplitude constante, par exemple BPSK ou QPSK.

**18.** Dispositif OFDM comportant un dispositif de commande ou des composants conçus et/ou commandés pour exécuter un procédé selon une revendication précédente.

## FIG 1

# FIG 2

## FIG 3

| 1 | 2 | 3 | 4 | 5 | 6 | 7 | 8 |
|---|---|---|---|---|---|---|---|
| Länge N | | RRC-Filter $\alpha = 0{,}7$ | | 2048 FFT | ⟳ | 2048 IFFT | CP |

innerer OFDM-Sender

A

$5*F/2 .. 2047 + 5*F/2$

Standard-SC-Sender

$\otimes$

$\exp(j2\pi kN_{Mitte}/2048)$

## FIG 4

A 11

| 12 | 13 | 14 | 15 | 16 | 17 | 18 | 19 |
|---|---|---|---|---|---|---|---|
| CP | 2048 FFT | | $H_k^{-1}$ | ⟳ | RRC-Filter | 2048 IFFT | | |

## FIG 5

innerer OFDM-Sender

| 1 | 2 | 20 | 21 | 3* | 6 | 7 | 22 | 8 |
|---|---|---|---|---|---|---|---|---|
| Länge N | DFT N | DC auf Mitte | spekt. Erweiterung | RRC-Filter | ⟳ | 2048 IFFT | zykl. F/2 | CP |

A

$F = round(2048/N)$

## FIG 6

A 11

| 23 | 12 | 13 | 24 | 17* |
|---|---|---|---|---|
| CP | zykl. versch. -F/2 | 2048 FFT | spekt. Maskierung | optional MRC oder MIMO | IDFT N |

innerer OFDM-Empfänger

## FIG 7

N=25, BPSK

——— SC DFT+SE    ——— SC DFT    - - - - OFDMA

N=25, QPSK

——— SC DFT+SE    ——— SC DFT    - - - - OFDMA

N=25, 16-QAM

——— SC DFT+SE    ——— SC DFT    - - - - OFDMA

**EP 2 103 070 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J.-P. JAVAUDIN ; C. DUBUC ; D. LACROIX ; M. EARNSHAW.** An OFDM evolution for the UMTS high speed downlink packet access. *Proc. IEEE,* 2004, vol. 2, 846-850, http://ieeexplore.ieee.org/xpl/RecentCon.jsp?punumber=9623
- **J. TUBBAX ; B. COME ; L. VAN DER PERRE ; L. DENEIRE ; S. DONNAY ; M. ENGELS.** OFDM versus Single Carrier with Cyclic Prefix: A system-based comparison. *Proc. IEEE,* 2001, vol. 2, 1115-1119, http://ieeexplore.ieee.org/xpl/RecentCon.jsp?punumber=7588
- **C. DESSET ; B. CÖME ; B. DEBAILLIE ; J. DRIESSCHE ; J. TUBBAX ; W. EBERLE ; J.W. WEIJERS.** *Constant Envelope Modulation Techniques for Non-Linear Front-Ends, http://www.imec.be/pacwoman/'', Deliverables/WP4/WP4.2-IMEC-D4.2.1_constant_enveloppe_techniques-12-01-2004-V1.0.doc*
- **A. GOLDSMITH ; P. VARAIYA.** Capacity of fading channels with channel side information. *IEEE Trans. Inf. Theory,* November 1997, vol. 43 (6
- *3GPP TR 25.814 V7.0.0,* Juni 2006, http://www.3gpp.org
- **D. SAMARDZIJA ; P. WOLNIANSKY ; J. LING.** Performance evaluation of the VBLAST algorithm in W-CDMA systems. *Proc. IEEE Vehicular Technology Conference,* 2001, vol. 2, 723-727, http://ieeexplore.ieee.org/xpl/RecentCon.jsp?punumber=7588
- **S.D. MORGERA.** Efficient synthesis and implementation of large discrete Fourier transforms. *SIAM Journal Comput.,* 1980, vol. 9 (2), 251-272
- **K. GENTILE.** *The care and feeding of digital, pulse-shaping filters, http://www.rfdesign.com*
- **H.G. MYUNG ; J. LIM ; D. J. GOODMAN.** Peak-to-average power ratio of single carrier FDMA signals with pulse shaping. *Proc. IEEE PIMRC,* 11. September 2006
- **H. CHEN ; V. JUNGNICKEL ; V. POHL ; C. VON HELMOLT.** A multicode space-frequency RAKE receiver. *Proc. 38th Asilomar Conference,* 2004, vol. 1, 672-676, http://ieeexplore.ieee.org/xpl/RecentCon.jsp?punumber=9626
- **MYUNG H G et al.** SINGLE CARRIER FDMA FOR UPLINK WIRELESS TRANSMISSION. *IEEE VEHICULAR TECHNOLOGY MAGAZINE,* September 2006